# EUROPÄISCHE PATENTANMELDUNG

(11) **EP 0 545 177 A1**
(43) Veröffentlichungstag der Anmeldung: **09.06.1993**
(21) Anmeldenummer: 92119808.1
(22) Anmeldetag: 20.11.1992
(51) Int. Cl.: G01N 27/28

(54) **Elektrodenhalterung für Eintauch-, Durchfluss- und Anbau-Messsysteme in der analytischen Chemie**

(30) Priorität: 06.12.1991 DE 4140286
(71) Anmelder: ENDRESS + HAUSER CONDUCTA GESELLSCHAFT FÜR MESS UND REGELTECHNIK mbH & Co., D-70839 Gerlingen (DE)
(72) Erfinder: Stellmacher, Klaus, W-7261 Oberreichenbach (DE)
(74) Vertreter: Otte, Peter, Dipl.-Ing.

(57) **Zusammenfassung**

Bei einer Elektrodenhalterung für Eintauch-, Durchfluß- und Anbau-Meßsysteme in der analytischen Chemie mit einem Außenrohr, in welchem ein die Meßsonde tragendes Innenrohr axial gleitverschieblich gelagert ist, wird bei automatischem Betrieb mittels einer Hilfsenergie vorgeschlagen, eine unter dem Druck der Hilfsenergie stehende Ausfallsicherung vorzusehen, die mechanisch aufgrund einer Federvorspannung mittels eines Sperrglieds die Axialverschiebung des Innenrohrs dann blokkiert, wenn die Hilfsenergie ausfällt. Hierzu ist ein auf der einen Seite von dem Druck der Hilfsenergie und auf der anderen Seite von einer Vorspannungsfeder beaufschlagter Kolben in einem stationär am Außenrohr geleitetem Zylinder vorgesehen.

## Beschreibung

### Stand der Technik

Die Erfindung betrifft eine Elektrodenhalterung für Eintauch- und Durchfluß-Meßsysteme in der analytischen Chemie nach dem Oberbegriff des Anspruchs 1.

In der analytischen Chemie ist die Kalibrierung bzw. Eichung und/oder Reinigung von chemischen Sensoren bei Eintauch-, Durchfluß- und Anbau-Meßsystemen, z.B. bestimmt zur kontinuierlichen Überwachung biologischer oder chemischer Verfahren durch entsprechende Messung der analytischen Parameter eines flüssigen Meßmediums, sehr häufig unverzichtbar, andererseits aber umständlich und aufwendig, da zu diesem Zweck die entsprechenden Meßelektroden, bei denen es sich beispielsweise um Meßsysteme für die pH-, Leitfähigkeits-, Sauerstoff- oder Chlormessung o.dgl. handelt, unter Prozeßbedingungen aus dem Meßmedium herausgefahren werden müssen.

Es ist daher übliche Praxis, entsprechende Elektrodenhalterungen so auszubilden (DE-OS 39 27 282.6-52), daß ein Außenrohr zur stationären Befestigung im Bereich des Meßmediums, beispielsweise an einem, im Prozeß auch unter Druck stehenden Behälter vorgesehen ist, in welchem ein die Meßsonde tragendes Innenrohr axial gleitverschieblich gelagert ist. Das Meßmedium wird bei aus diesem zurückgezogenen Innenrohr durch einen Sperrhahn abgeschlossen, während in der Betriebsstellung der Meßsondenschaft durch den Sperrhahn geführt ist.

Dabei setzen sich immer häufiger solche Schleusenarmatur-Systeme durch, bei denen die Meßsonde, üblicherweise mit dem sie tragenden Innenrohr, vollautomatisch verfahren wird, durch entsprechende Ansteuerung eines mit dem Innenrohr verbundenen Kolbens beispielsweise mit pneumatischer Druckluft als Hilfsenergie, so daß die Meßsonde aus einer Betriebsposition, in welcher sie in das Meßmedium eintaucht, in eine zurückgezogene Wartungs-, Reinigungs- und/oder Eichposition zurückgezogen wird und umgekehrt in das Meßmedium wieder abgesenkt wird.

In diesem Zusammenhang ist es bekannt (WO 86/07151), die Meßwertgebersonde als Teil der Meßeinrichtung innerhalb einer Führungseinrichtung zur Halterung und Führung des Meßfühlers zwischen einer Betriebsstellung und der Wartungsstellung zu bewegen, wozu ferner ein Absperrorgan vorgesehen ist, welches beim Zurückfahren des Meßfühlers den hierdurch freigewordenen Bereich gegenüber dem Meßmedium abschließt.

Das Grundprinzip bei solchen Meßwertgebersonden besteht also darin, daß man zu Eichungs- bzw. oder Reinigungszwecken oder auch nur, um die Elektrode beispielsweise für einen vorgegebenen Zeitraum zu wässern, die Elektrodenhalterung, die in die Rohrleitung mit dem Meßmedium oder in dem Reaktionsbehälter im Prozeß hineinreicht, so ausbildet, daß die Elektrode automatisch verfahrbar ist, mit beliebig ausgelegter pneumatischer oder hydraulischer Steuerlogik, wobei diese Vorgänge auch innerhalb eines festgegebenen Zeittakts oder in Abhängigkeit zu sonstigen bestimmbaren oder gemessenen Parametern durchgeführt werden.

Häufig ergeben sich in diesem Zusammenhang Arbeitsbedingungen für die Meßsonde, die dazu führen, daß mindestens im Prozeß, beispielsweise aufgrund eines überlagerten Drucks oder auch aufgrund eines Meßmediumdrucks selbst eine erhebliche Druckeinwirkung resultiert, die die Tendenz hat, die ohnehin gleitverschieblich getragene Meßsonde im Außenrohr wieder zurückzuschieben, so daß diese nicht mehr messen kann.

Solange dabei die Innenrohrlagerung mit dem unter dem Druck der Hilfsenergie stehenden, am Innenrohr befestigten Kolben in Gegenrichtung wirkt und die Meßsonde im Meßmedium hält, ändert sich an den angestrebten Meßbedingungen nichts. Fällt jedoch aus irgendeinem Grund die Hilfsenergie aus oder reduziert sie sich um einen nennenswerten Betrag, dann kann dies zu erheblichen Störungen im weiteren Arbeitsablauf führen, weil der Ausfall der Hilfsenergie unter Umständen nicht rechtzeitig bemerkt wird, wenn eben gerade keine automatischen Wartungs- oder Eichungsoperationen durchzuführen sind, andererseits aber plötzlich verfälschte oder sinnlose Meßdaten von der Meßsonde geliefert werden, so daß es im Prozeß zu irreparablen Schäden kommen kann.

Die Erfindung hat daher als Ziel, eine Ausfallsicherung zu schaffen, die bei hilfskraftgesteuerten Armaturen, Meßarmaturen, Meßaufnehmern, Schutzgehäusen für Sensoren u.dgl. dafür sorgt, daß auch bei Änderung, Ausfall oder Wegfall der Hilfsenergie kein Meßdatenausfall auftritt.

### Vorteile der Erfindung

Die Erfindung erreicht dieses Ziel mit den Merkmalen des Anspruchs 1 und hat den Vorteil, daß automatisch arbeitende Schleusenarmaturen mit verfahrbarem Meßsensor unter allen Umständen einwandfreie Meßdaten liefern, auch dann, wenn die für den automatischen Ablauf erforderliche Hilfsenergie ausfällt, weil in diesem Falle ein mechanisches Sperrglied aktiviert wird, welches - lediglich für die Ausfalldauer der Hilfsenergie - die erforderliche Arretierung des Meßsensors in der Betriebsstellung weiter sichert, andererseits aber in der Lage ist, den vollautomatischen Arbeitsablauf nicht zu stören, also bei Wiedereinsetzen der Hilfsenergie die weitere Blockierung der Meßsensorposition aufhebt und daher den vollautomatischen Arbeitsablauf wieder unterstützt.

Vorteilhaft ist bei vorliegender Erfindung ferner der geringe erforderliche Aufwand sowie der Umstand, daß es unter allen Umständen sichergestellt ist, daß bei Hilfsenergieausfall die Meßsonde an ihrem Meßplatz verbleibt, da die Ausfallsicherung selbst keiner sonstigen Ansteuerung oder Zuführung elektrischer Signale bedarf, sondern aufgrund einer mechanischen Federvorspannung immer dann aktiviert wird, wenn die Hilfsenergie (pneumatisch oder hydraulisch) einen vorgegebenen Druckwert unterschreitet.

Vorteilhaft ist ferner, daß durch den rein mechanischen Aufbau der Ausfallsicherung auch bei rauher Behandlung und Nichtgebrauch über längere Zeiten Alterungseinflüsse so gut wie ausgeschlossen sind, da die Federkraft entsprechend kräftig eingestellt werden kann und ein Arretierglied immer dann schnappartig in eine Verriegelungsposition mit dem innneren Rohr preßt, wenn die Wirkung der Hilfsenergie auf einen kleinen Rückhaltekolben der Ausfallsicherung entfällt.

Aufbau und Kostenanteil für die für die Sicherheit des automatischen Arbeitsablaufs besonders wichtige Ausfallsicherung sind denkbar gering; ein federvorgespannter Kolben in einer oberen Kopfplatte der Schleusenarmatur ist mit Vorteil direkt vom ohnehin vorhandenen Preßluftanschluß mitversorgt und treibt mit seiner Kolbenstange einen an dieser angeordneten, als Arretierglied wirkenden nasenartigen Vorsprung in eine Ringnut des Innenrohrs mit Meßsonde, wenn der Druck der Hilfsenergie auf den Kolben nachläßt oder wegfällt.

Durch die in den Unteransprüchen aufgeführten Maßnahmen sind vorteilhafte Weiterbildungen und Verbesserungen der Erfindung möglich. Besonders vorteilhaft kann hier noch die Einstellbarkeit der Federvorspannung sein, so daß auch bei geringerem Hilfsenergie-Druckabfall sichergestellt ist, daß die Ausfallsicherung anspricht, auch wenn das Wegdrücken der Meßsonde aufgrund des Meßmediumdrucks nur ganz allmählich erfolgt.

### Zeichnung

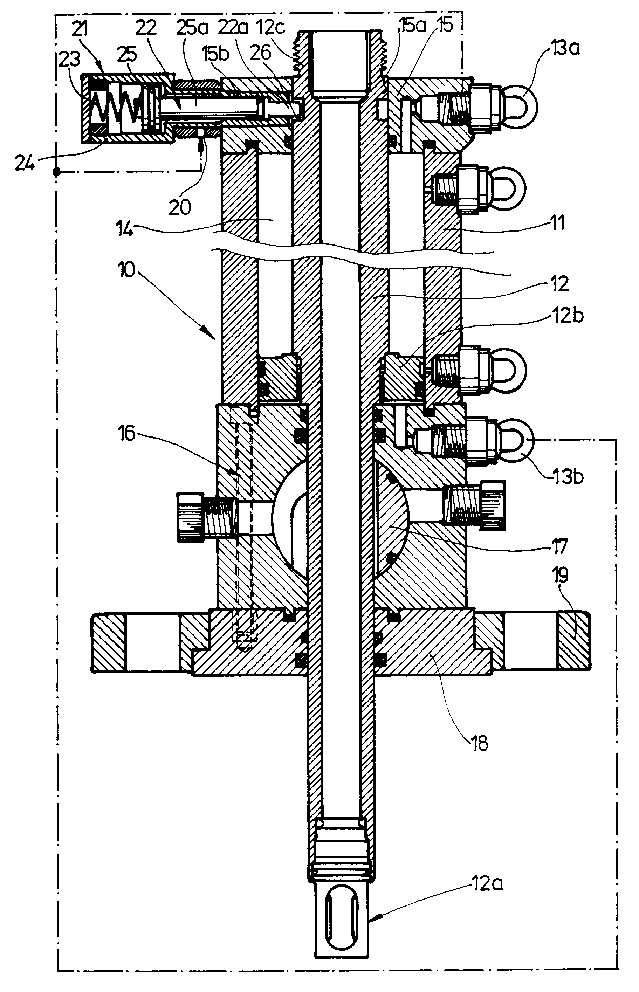

Ein Ausführungsbeispiel der Erfindung ist in der Zeichnung dargestellt und wird in der nachfolgenden Beschreibung näher erläutert. Die Zeichnung zeigt eine Elektrodenhalterung mit Außenrohr und, über einen Ringkolben angetrieben, das die Meßsonde tragende und im Außenrohr axial gleitverschieblich gelagerte Innenrohr.

### Beschreibung der Ausführungsbeispiele

Der Grundgedanke vorliegender Erfindung besteht darin, durch ein mechanisches, federvorgespanntes Arretierglied dafür zu sorgen, daß bei Ausfall der Hilfsenergie bei automatisch betriebenen Schleusenarmaturen ein Zurückdrängen der Meßsonde durch den mediumseigenen Druck unmöglich wird, weil ein federvorgespanntes Arretierglied in eine Ringnut des Innenrohrs einschnappt, an welchem gleichzeitig ein unter der Druckwirkung der Hilfsenergie stehender Kolben so angeordnet ist, daß bei Rückkehr der Hilfsenergie die Blockierposition des Arretierglieds wieder aufgehoben wird.

In der Zeichnung ist die Elektrodenhalterung mit 10, ein vorzugsweise zylindrisches Außenrohr der Elektrodenhalterung mit 11 und das in diesem Außenrohr längsverschieblich gelagerte, gleichzeitig die eigentliche Meßsonde 12a aufnehmende Innenrohr mit 12 bezeichnet. Genauer braucht auf den Aufbau einer solchen Schleusenarmatur nicht eingegangen zu werden, da diese beispielsweise aus der weiter vorn schon genannten DE-OS 39 27 282 bzw. einem parallelen Gebrauchsmuster G 89 09 903.6 schon bekannt ist. Ein Ringkolben 12b ist mit dem Innenrohr fest verbunden und steht über beidseitige Druckluftanschlüsse 13a und 13b mit einer geeigneten, von einer Steuerlogik angesteuerten und zugeteilten Hilfsenergiequelle, üblicherweise Druckluft oder auch ein hydraulisches Druckmedium, in Verbindung.

Hierdurch ist es möglich, bei Druckbeaufschlagung über den Druckanschlußnippel 13b die Meßsonde mit Innenrohr nach oben zu verfahren und aus dem Meßmedium zurückzuziehen, während bei Druckbeaufschlagung über den Druckanschluß 13a die Meßsonde in ihre Betriebsstellung verfährt.

Das im Abstand zum Innenrohr die Druckkammer 14 für den Ringkolben 12b bildende Außenrohr 11 trägt eine Kopfplatte 15, durch welche der obere Endteil 12c des Innenrohrs ragt und auch gleitverschieblich in einer entsprechenden Durchtrittsbohrung 15a gelagert ist. Nach unten schließt sich an das Außenrohr 11 noch der Lagerbereich 16 für den Sperrhahn 17 an, mit einer unteren Abschlußplatte 18, die von einem Montageflansch 19 aufgenommen und gehalten wird.

Auf die Darstellung einer speziellen Steuerlogik für die Zuführung der jeweiligen Drücke braucht nicht weiter eingegangen zu werden, da dies nicht Gegenstand vorliegender Erfindung ist; wesentlich ist lediglich, daß entweder, wie strichpunktiert in der Zeichnung dargestellt, eine Druckverbindung vom oberen Druckanschluß 13a zu einem Druckeinlaß 20 einer Hilfsenergie-Ausfallsicherung 21 oder, wie ebenfalls strichpunktiert dargestellt, von dem unteren Druckanschluß zum gleichen Druckeinlaß der Ausfallsicherung 21 vorgesehen ist. Diese Leitungen könnten auch innerhalb der Schleusenarmatur durch entsprechende Kanäle gebildet sein, wobei alternativ eine Drucksignalzuführung zum Bereich der Ausfallsicherung 21 auch von einem entsprechenden Anschluß der hydraulischen oder pneumatischen Steuerlogik (nicht dargestellt) oder von einem sonstigen Anschluß für die Hilfsenergie abgeleitet wird.

Die Ausfallsicherung 21 umfaßt ein Sperrglied 22, welches mit einem vorderen Arretierelement 22a eine mechanisch-formschlüssige Verbindung mit dem die Meßsonde 12a tragenden Innenrohr 12 eingeht, vorausgesetzt, daß kein Hilfsenergiedruck vorliegt, wobei die Einwärtsbewegung des Arretierelements 22a in die Blockierposition mit dem Innenrohr 12 unter Druck einer Vorspannungsfeder 23 erfolgt.

Der Aufbau der Ausfallsicherung 21 umfaßt daher bei dem dargestellten Ausführungsbeispiel einen Zylinder 24, in welchem ein Kolben 25 gleitverschieblich gelagert ist, der das mechanische Sperrglied in Verbindung mit seiner in der Zeichenebene nach rechts verlängerten Kolbenstange 25a bildet.

Der Zylinder 24 ist dabei so ausgebildet, daß er sich im Bereich der Kolbenstangenverlängerung in etwa auf den Außendurchmesser der Kolbenstange verjüngt und weitergeführt bevorzugt gleichzeitig ein Außengewinde aufweist, mit welchem der Zylinder 24 in eine seitliche Querbohrung 15b der Kopfplatte 15 eingeschraubt ist. Zwischen der Zylinderrückwand und dem Kolben 25 befindet sich die Vorspannungsfeder 23; die andere Seite des Kolbens ist vom Druck der zugeführten Hilfsenergie beaufschlagt, wobei die Feder so bemessen ist, daß bei hinreichend hohem Hilfsenergiedruck das vordere Arretierelement 22a in Form eines Zapfens oder Bolzens stets aus einer Arretiernut 26 am Innenrohr zurückgezogen ist. Die Arretiernut 26 kann umlaufend ausgebildet sein, wenn Innen- und Außenrohr ringförmige Zylinderformen bilden.

In der Zeichnung ist die ausgefahrene Blockierposition des Arretierelements 22a gezeigt, in welcher also bei weggefallenem oder auf einen unteren Schwellenwert reduzierten Hilfsenergiedruck die Vorspannungsfeder 23 wirksam ist, das Arretierelement 22 in die Aufnahmenut 26 des Innenrohrs 12 preßt und so verhindert, daß sich das Innenrohr bei Wegfall hinreichenden Hilfsenergiedrucks auf seinen eigenen Ringkolben 12b unter dem einwirkenden Mediumsdruck allmählich oder auch schnell nach oben zurückzieht.

Es versteht sich, daß die eine Ausfahrsicherung bildende, das Sperrglied 22 umfassende Arretiereinrichtung in grundsätzlich beliebiger Weise angesteuert werden kann - so muß beispielsweise eine Ansteuerung dann erfolgen, wenn vom Benutzer bewußt auf den Druckeingangsanschluß 13b Hilfsenergie geschaltet wird, damit die Meßsonde nach oben verfahren kann. Es ist dann möglich, durch Beaufschlagung des Kolbens das Sperrglied 22 schon vor der Beaufschlagung des Hochfahr-Eingangsanschlusses 13b zurückzuziehen, so daß ein eventuelles Verklemmen vermieden wird, wobei andererseits die für den Druckanschluß 13b benötigte Hilfsenergie auch mit Hilfe eines mit dem Sperrglied 22 mechanisch gekoppelten oder sonstwie in die Ausfallsicherung 21 integrierten Schaltventils, beispielsweise 3/2-Wegeventils verriegelt werden kann, wenn die Ausfahr- oder Ausfallsicherung durch die Feder aktiviert ist.

Das 3/2-Wegeventil kann als Magnetventil elektrisch angesteuert sein oder wird von hydraulischer oder pneumatischer Hilfsenergie betrieben.

Abschließend wird darauf hingewiesen, daß die Ansprüche und insbesondere der Hauptanspruch Formulierungsversuche der Erfindung ohne umfassende Kenntnis des Stands der Technik und daher eine einschränkende Präjudiz sind. Daher bleibt es vorbehalten, alle in der Beschreibung, den Ansprüchen und der Zeichnung dargestellten Merkmale sowohl einzeln für sich als auch in beliebiger Kombination miteinander als erfindungswesentlich anzusehen und in den Ansprüchen niederzulegen.

## Patentansprüche

1. Elektrodenhalterung für Eintauch-, Durchfluß- und Anbau-Meßsysteme in der analytischen Chemie, insbesondere für die pH-, Redox-, Leitfähigkeits-, Sauerstoff- und Chlormessung u.dgl., mit einem Außenrohr, in welchem ein die Meßsonde tragendes Innenrohr axial gleitverschieblich gelagert ist, insbesondere mit einer Hilfsenergie (Druckluft) automatisch betriebene Schleusenarmatur, dadurch gekennzeichnet, daß als Ausfallsicherung (21) zur Vermeidung einer Störung bei Ausfall/Reduzierung der Hilfsenergie ein mechanisches Sperrglied (22) vorgesehen ist, welches mit einem Arretierelement (22a) vom Außenrohr (11) aus, an welchem es gelagert ist, unter der Wirkung einer Federvorspannung in den Bereich des Innenrohrs (12) eingreift, dessen Verschiebbarkeit hierdurch blockiert und selbst so unter der Einwirkung des Hilfsenergiedrucks steht, daß bei vorhandener Hilfsenergie das Arretierglied aus der Blockierposition zurückgedrückt ist.

2. Elektrodenhalterung nach Anspruch 1, dadurch gekennzeichnet, daß die Ausfallsicherung (21) einen in Querrichtung zur Innenrohrverschiebung wirksamen Kolben (25) umfaßt, dessen verlängerte Kolbenstange (25a) in das Arretierglied (22a) übergeht, welches in eine Ringausnehmung (26) am Innenrohr (12) eingreift.

3. Elektrodenhalterung nach Anspruch 1 oder 2, dadurch gekennzeichnet, daß ein den Kolben (25) aufnehmender Zylinder (24) vorgesehen ist, der in eine Aufnahmequerbohrung (15b) einer das Außenrohr abschließenden Kopfplatte (15) so eingeschraubt ist, daß über die Kolbenstangenverlängerung das Arretierelement (22a) die Ringnut (26) im Innenrohr erreicht und daß auf die eine Seite des Kolbens (25) der Druck einer Vorspannungsfeder (23) einwirkt und die andere Kolbenseite vom Hilfsenergiedruck beaufschlagt ist.

4. Elektrodenhalterung nach einem der Ansprüche 1 bis 3, dadurch gekennzeichnet, daß die für die automatische Verschiebung des Innenrohrs vorgesehenen Hilfsenergieanschlüsse (13a, 13b) der Schleusenarmatur intern oder extern mit einem Druckeinlaß (20) der Ausfallsicherung (21) verbunden sind.

5. Elektrodenhalterung nach einem der Ansprüche 1 bis 4, dadurch gekennzeichnet, daß mit dem Sperrglied (22) der Ausfallsicherung (21) ein 3/2-Wegeventil mechanisch gekoppelt oder in die Ausfallsicherung (21) integriert ist, die die dem Druckanschlußnippel (13b) für das Hochfahren der Meßsonde zugeführte Hilfsenergie dann verriegelt, wenn die Ausfallsicherung durch die Feder (23) aktiviert ist.
